# FASCICULE DE BREVET EUROPEEN

(11) **EP 0 672 791 B1**
(45) Date de publication et mention de la délivrance du brevet: **13.05.1998**
(21) Numéro de dépôt: 95400599.7
(22) Date de dépôt: 17.03.1995
(51) Int. Cl.: E01C 7/26, E01C 19/10, C08L 95/00

(54) **Enrobé bitumineux à chaud contenant du caoutchouc de récupération**
Wiedergewonnene Kautschuk enthaltende heisse, bituminöse Strassendeckenmischung
Hot bituminous road covering comprising recycled rubber

(30) Priorité: 18.03.1994 FR 9402885
(43) Date de publication de la demande: 20.09.1995
(73) Titulaire: COLAS, 92653 Boulogne-Billancourt Cédex (FR)
(72) Inventeur: Godard, Eric, F-78180 Montigny-Le-Bretonneux (FR)
(74) Mandataire: Michelet, Alain

(56) Documents cités:
- EP-A- 0 381 903
- WO-A-92/21820
- FR-A- 2 206 410
- US-A- 4 548 962
- CIVIL ENGINEERING, vol. 54, no. 7, Juillet 1984 NEW YORK US, page 18 'REDECKING WITH SPECIAL ASPHALT SAVES TIME, MATERIAL AND MONEY'

## Description

L'invention concerne un enrobé bitumineux à chaud comportant du caoutchouc et qui est destiné à constituer une couche de roulement mince d'une route. L'invention concerne également un procédé de fabrication d'un tel enrobé bitumineux et un procédé de réalisation d'une bande de roulement avec un tel enrobé (tel que décrit, par exemple, par EP-A-0381903).

Depuis de nombreuses années, on cherche à réaliser des revêtements de route avec des enrobés contenant du caoutchouc de récupération.

En effet, l'élimination des pneus usés constitue un problème auquel aucune solution satisfaisante n'a pour l'instant été trouvée. Ceci semble être dû au fait que les pneus sont d'origines diverses et, surtout n'ont pas été fabriqués en prenant en compte la possibilité d'une réutilisation ultérieure. En conséquence, le stockage de ces pneus dans des décharges est la solution actuelle la plus répandue, mais elle présente de nombreux inconvénients et ne peut être retenue que de manière temporaire.

Par ailleurs, depuis longtemps on pense que l'introduction de caoutchouc dans les bitumes doit permettre d'améliorer les propriétés des enrobés, de donner une plus grande souplesse aux revêtements réalisés et d'améliorer leur résistance à la fatigue, aux basses températures, de diminuer les phénomènes de bruit et de réflexions de sources lumineuses.

C'est ainsi, que des développements ont été réalisés dans deux directions principales:
- D'une part, des procédés dits "humides" ont été développés. Selon ces procédés, le caoutchouc est mélangé au bitume de telle manière qu'il réagisse avec lui et forme un liant caoutchouteux.
- D'autre part, des procédés dits "secs" ont également été développés dans lesquels le caoutchouc est mélangé au bitume à la manière d'un agrégat.

Pour la mise en oeuvre de cette dernière catégorie de procédé, on considérait jusqu'à présent nécessaire d'utiliser de la poudrette ayant une granulométrie comprise entre 1 et 3 ou 2 et 4 mm, c'est-à-dire une poudrette de caoutchouc ayant une granulométrie comparable à celle des gravillons (voir, p.ex. US-A-4 548 962).

On produisait alors un revêtement routier qui au moins par endroits, présentait une épaisseur de caoutchouc de plusieurs millimètres entre deux granulats ou gravillons traditionnels. Le caoutchouc ayant un module d'élasticité extrêmement faible, une telle épaisseur de caoutchouc entre deux granulats traditionnels, c'est-à-dire durs, conduit à des déformations très importantes du revêtement lorsqu'il est soumis à une contrainte locale élevée telle que celle produite par le passage d'un camion. L'action répétée de telles déformations produit une fatigue prématurée des liaisons bitume-granulats, bitume-caoutchouc et du bitume lui-même. Au total, l'introduction de la poudrette de caoutchouc dans de telles conditions réduit la stabilité du revêtement et accélère son usure.

Dans d'autres réalisations, la poudrette de caoutchouc, de faible granulométrie a été ajoutée à des mélanges comportant une importante fraction sableuse pour former un sable bitumineux. Dans cette configuration, également une partie au moins du caoutchouc est susceptible d'être soumise à des efforts de pression importants conduisant à des déformations affectant la stabilité et la durée de vie du revêtement. Le revêtement ainsi obtenu a un faible taux de vide, a une texture superficielle très lisse et n'offre pas une bonne adhérence des véhicules par temps pluvieux.

L'objectif de l'invention est de proposer un enrobé bitumineux à chaud comportant de la poudre de caoutchouc qui évite les inconvénients mentionnés plus haut.

C'est un autre objectif de la présente invention de proposer un enrobé bitumineux à chaud comportant de la poudre de caoutchouc qui permette l'élimination de déchets de caoutchouc.

C'est encore un objectif de l'invention de proposer un enrobé bitumineux à chaud comportant de la poudre de caoutchouc qui permette d'obtenir un revêtement routier ayant une bonne drainabilité superficielle à l'eau.

C'est encore un objectif de la présente invention de proposer un enrobé bitumineux à chaud comportant de la poudre de caoutchouc qui permette la réalisation d'un bitume routier ayant de bonnes propriétés sonores.

Ces problèmes sont résolus par un enrobé bitumineux ayant les caractéristiques de la revendication 1.

A cet effet l'invention concerne un enrobé bitumineux à chaud destiné à constituer une couche de roulement, comprenant comme liant un bitume classique ou un bitume modifié et des granulats comprenant des gravillons et une fraction sableuse, tels que le mélange de ces deux composants aboutisse à un matériau de granulométrie discontinue, et la fraction sableuse ayant un volume inférieur au volume interstitiel des graviers. L'enrobé pourra également contenir des fines minérales dans le cas où la fraction sableuse n'en contiendrait pas suffisamment.

Selon l'invention, une partie de la fraction sableuse est remplacée par de la poudre de caoutchouc dont les particules ont un diamètre moyen compris entre 0 et 1,5 mm. Au squelette granulaire ainsi défini, on ajoute alors un liant bitumineux: bitume pur ou bitume modifié par des additifs tels que des polymères par exemple.

Cet enrobé est destiné à être appliqué à chaud à l'aide d'un finisseur.

Le liant de la couche d'accrochage peut être une émulsion de bitume pur ou une émulsion de bitume modifié par des polymères. Une préférence pourra être accordée aux émulsions élastomères pour raison d'affinité chimique avec le caoutchouc, mais sans nécessité particulière.

Le choix d'une granulométrie pour le caoutchouc proche de celle d'un sable aussi fine que possible: 0/1 mm (donc 100% des particules sont inférieures à 1,5 mm), permet de remplacer par du caoutchouc une partie du sable constituant le squelette granulaire du bitume.

La fraction sableuse d'un mélange granulaire a pour fonction de remplir les vides laissés entre les plus gros éléments. L'avantage de remplacer le sable par de la poudre fine de caoutchouc et non pas une partie des gravillons par du granulat plus grossier de caoutchouc est que l'épaisseur de caoutchouc entre deux gravillons reste faible sans être nulle, alors que pour des granulats de caoutchouc plus grossier (de taille > 2mm), cette épaisseur peut atteindre plusieurs millimètres.

Une épaisseur de caoutchouc plus faible entre les gravillons permet d'absorber les vibrations provoquées par les chocs produits par les pneus lors du roulement à haute vitesse des véhicules, sans diminuer les performances mécaniques de l'enrobé. Cela permet de limiter le bruit de roulement à sa source.

Par ailleurs, les enrobés bitumineux discontinus, minces ou très minces, sont rugueux au sens d'un coefficient de frottement avec un pneumatique. Ils sont donc performants du point de vue de la sécurité. Cette qualité est accrue par l'adjonction de caoutchouc qui leur donne un aspect mat propre à limiter la réflexion des projecteurs des véhicules en circulation et à limiter ainsi les risques d'éblouissement, et à améliorer la visibilité de la signalisation horizontale.

En outre, pour s'assurer d'une bonne rugosité, la teneur totale en sable (minéral + caoutchouc) ne doit pas dépasser le volume des vides interstitiels entre les gravillons, soit environ 30 à 40% du volume global. Ainsi, la poudrette de caoutchouc est employée en substitution de, et non en ajout à, la fraction sableuse usuelle.

L'invention concerne de préférence également les caractéristiques ci-après :
- Le pourcentage de caoutchouc dans le mélange granulats-caoutchouc est compris entre 1,5% et 10%.

Avec un pourcentage inférieur à environ 1,5%, l'effet du caoutchouc sur les caractéristiques de l'enrobé bitumineux est faible. De plus, pour un tel pourcentage, les quantités de caoutchouc recyclé sont faibles.

Avec un pourcentage supérieur à environ 10%, on dépasse en général le taux de vide laissé entre les éléments du mélange granulaire.

Le caoutchouc envisagé est bien issu du recyclage des pneumatiques usagés, donc vulcanisés et contenant une forte proportion de noir de carbone et autres additifs selon leur origine. L'origine peut être soit de pneumatiques de véhicules légers soit de pneumatiques de poids-lourds, les dosages pour un même résultat peuvent être différents.

Par exemple, pour des performances mécaniques comparables, on pourra retenir:
- L'ensemble comporte du caoutchouc d'origine naturel, le pourcentage dans le mélange granulats-caoutchouc en étant de l'ordre de 4% environ.
- L'enrobé comporte du caoutchouc synthétique, le pourcentage dans le mélange granulats-caoutchouc en étant de l'ordre de 2% environ.

Les pourcentages indiqués ci-avant représentent des valeurs préférées, mais non exclusives.
- Le pourcentage de bitume dans l'enrobé est compris entre 4 et 14%.
- L'enrobé est répandu en une couche de roulement mince d'une route, l'épaisseur de la couche étant comprise entre 1,5 et 4 cm, de préférence entre 2,0 et 2,5 cm.

L'enrobé bitumineux de l'invention est mince (M), très mince (TM) ou ultramince (UM), mais de préférence très mince. L'intérêt de ce choix est multiple et concerne à la fois la durabilité de l'enrobé et ses qualités finales.

Les enrobés M, TM ou UM sont des enrobés très grenus, ils contiennent beaucoup de gravillons et peu de sable, ce qui va dans le sens de l'amélioration du contact proche entre gravillons exposé ci-dessus.

Enfin, les enrobés M, TM ou UM sont appliqués à des quantités par mètre carré faibles. D'autre part, le caoutchouc présente actuellement encore un coût élevé vis-à-vis des autres composants de l'enrobé. Le surcoût final par mètre carré de chaussée traitée est d'autant plus faible que le dosage par unité de surface est faible.

L'invention concerne également un procédé de fabrication d'un enrobé bitumineux à chaud, destiné à constituer une couche de roulement d'une route en prenant comme liant un bitume classique ou un bitume modifié par des polymères, dans lequel les granulats sont portés à la température d'enrobage, le liant est porté à la température d'enrobage, les granulats et le liant sont malaxés en vue de produire l'enrobé bitumineux.

Selon l'invention, la poudre de caoutchouc est apportée, à température ambiante, pendant le malaxage de l'ensemble granulats-bitume déjà porté à la température d'enrobage.

En variante du procédé de fabrication défini ci-avant, la poudre de caoutchouc est introduite au malaxeur entre la fin de séchage des agrégats minéraux et le début du malaxage.

Le caoutchouc craignant les très hautes températures, en particulier la présence d'une flamme, il est introduit à un point de la chaîne de fabrication où les granulats sont déjà à la température souhaitée d'enrobage.

L'invention concerne de préférence également les caractéristiques ci-après :
- En cas de fabrication de l'enrobé par une centrale de fabrication discontinue, le caoutchouc recyclé est introduit au malaxeur en sacs thermofusibles ou de façon continue au pied de l'élévateur à chaud,
- En cas de fabrication de l'enrobé par une centrale de fabrication discontinue disposant d'une trémie doseuse permettant d'apporter un granulat au pied de l'élévateur à chaud, celle-ci peut être utilisée,
- En cas de fabrication de l'enrobé par une centrale de fabrication continue à malaxeur séparé, le caoutchouc recyclé est introduit au malaxeur ou au pied de l'élévateur à chaud en fin de séchage,
- En cas de fabrication de l'enrobé par une centrale d'enrobage continue à malaxage intégré au tambour sécheur, il est nécessaire de disposer d'une trémie doseuse permettant d'incorporer le sable de caoutchouc à la fin du séchage des agrégats minéraux par l'anneau de recyclage.
- L'enrobé bitumineux ainsi obtenu est maintenu à sa température de fabrication pendant au moins une heure dans une enceinte calorifugée ou chauffée telle que la trémie de stockage habituelle dans une usine d'enrobage avant d'être chargé dans un camion.

En effet, le caoutchouc est un matériau poreux qui contient des composés compatibles avec le bitume. En maintenant l'enrobé contenant du caoutchouc en stock à sa température de fabrication pendant au moins une heure, on assure une excellente liaison entre bitume et caoutchouc.

L'invention concerne, par ailleurs, également un procédé de réalisation d'une couche de roulement d'une route avec un enrobé bitumineux tel que défini plus haut.

Selon l'invention, ce procédé de réalisation comprend les étapes de répandage d'une couche d'accrochage sur la route destinée à recevoir la couche de roulement, répandage d'une couche dudit enrobé bitumineux et compactage de cette couche d'enrobé bitumineux.

Dans un mode de réalisation préféré de l'invention, le compactage de l'enrobé bitumineux répandu est effectué avec un compacteur autre qu'un compacteur à pneumatique. De même, on prend garde à éviter le collage de l'enrobé aux billes du compacteur.

D'autres caractéristiques et avantages de l'invention ressortiront de la description de deux exemples de réalisation de l'enrobé de l'invention, et d'un exemple de mise en oeuvre du procédé de fabrication d'un enrobé bitumineux selon l'invention.

La description de la mise en oeuvre du procédé de fabrication est faite en référence aux dessins sur lesquels:
La Figure 1 montre une centrale de fabrication de type discontinu pour un enrobé bitumineux selon l'invention.
La Figure 2 montre une centrale de fabrication pour un enrobé bitumineux selon l'invention, utilisant un tambour-sécheur-mélangeur.
La Figure 3 est une représentation synoptique des étapes du procédé de fabrication d'un enrobé bitumineux selon l'invention.
La Figure 4 montre une centrale de fabrication classique de type continu, et
La Figure 5 montre une centrale continue à double tambour.
La Figure 6 représente, sous la forme d'un graphisme, des résultats d'essai sur des enrobés selon l'invention.

L'enrobé bitumineux de l'invention comprend essentiellement des granulats de tailles différentes et du bitume. Le tableau I en montre deux exemples de composition.
Le premier exemple est un enrobé bitumineux mince, désigné par la suite enrobé A, alors que le deuxième exemple est un enrobé bitumineux très mince, désigné par la suite enrobé B.

L'enrobé A comprend d'abord un mélange de granulats-caoutchouc ainsi qu'un bitume.

Le mélange granulats-caoutchouc est constitué de 97% de granulats minéraux dont 63% sont de granulométrie 6/10 alors que 34% sont de granulométrie 0/2, ainsi que de 2% d'un caoutchouc de granulométrie 0/1. Ce mélange est complété (1%) par un filler.

A ce mélange granulats-caoutchouc, un bitume 60/70 est ajouté. Il représente 6,2% de la masse des granulats secs.

L'enrobé bitumineux B diffère de l'enrobé A dans les pourcentages des différents composants. Ainsi, le mélange granulats-caoutchouc comporte 86% de granulat minéral de granulométrie 6/10 et 11% de granulat minéral de granulométrie 0/2. Le pourcentage de caoutchouc d'une granulométrie de 0,1 (2%) et de filler (1%) correspond aux valeurs indiquées pour l'enrobé A. La proportion de bitume est de 4,9%.

Les enrobés A et B sont fabriqués à une température de l'ordre de 150°C.

Pour illustrer la discontinuité granulométrique du mélange des granulats utilisés pour constituer des enrobés bitumineux selon l'invention, le tableau II résume l'analyse granulométrique, effectuée selon la norme P 18-560 des granulats minéraux 6/10 et 0/2. De plus, le tableau II contient l'analyse granulométrique de la poudre de caoutchouc 0/1 utilisée pour les enrobés A/B décrits ci-avant.

Pour mettre en évidence les avantages de l'enrobé bitumineux de l'invention en regard d'enrobés de référence dont le comportement sur route est connu, des essais classiques et des essais particuliers ont été effectués sur les échantillons suivants: un échantillon de référence d'un enrobé drainant au liant polymère, désigné par la suite enrobé C, un échantillon d'un enrobé bitumineux selon l'invention contenant 2% de poudre de caoutchouc, désigné par la suite enrobé D, et un échantillon d'un enrobé bitumineux selon l'invention contenant 4% de poudre de caoutchouc, désigné par la suite enrobé E.

Les résultats des essais sont résumés au tableau III. Ces résultats montrent que l'aptitude au compactage ainsi qu'à des résistances en compression et la tenue à l'eau des enrobés D et E sont très voisines des caractéristiques correspondantes de l'enrobé C de référence.

Des essais particuliers tels l'essai CANTABRO, qui permet d'évaluer la perte de poids de l'éprouvette à l'usure, et un essai de fluage/relaxation ont montré la supériorité des enrobés bitumineux de l'invention par rapport à l'enrobé de référence, sur la tenue mécanique sous trafic.

En effet l'essai CANTABRO consiste à mouler des éprouvettes cylindriques d'environ 1300 g, puis de les user à une température choisie de 18°C dans un tambour en rotation de type Los Angeles. On mesure alors la perte de poids de chaque éprouvette après usure. Plus la perte est faible, plus l'enrobé est considéré comme résistant. Les résultats présentés dans le tableau III mettent en évidence une meilleure tenue de l'enrobé bitumineux de l'invention à cet essai que l'enrobé bitumineux de référence.

De plus, un essai de fluage/relaxation a été mis en oeuvre. Cet essai consiste en l'application d'une pression en 3 secondes sur une éprouvette cylindrique de 7,5 kg environ moulée avec la presse de compactage giratoire à 200 girations. On maintient ensuite cette charge fixée à cette barre pendant 5 secondes, puis on relâche la charge en 3 secondes. On enregistre la déformation de l'éprouvette pendant ce cycle, puis pendant 60 secondes après la décharge. La déformation des éprouvettes est exprimée en % et avec un signe négatif pour exprimer le fluage (raccourcissement de l'éprouvette) ou avec un signe positif pour la relaxation (récupération dimensionnelle après décharge).

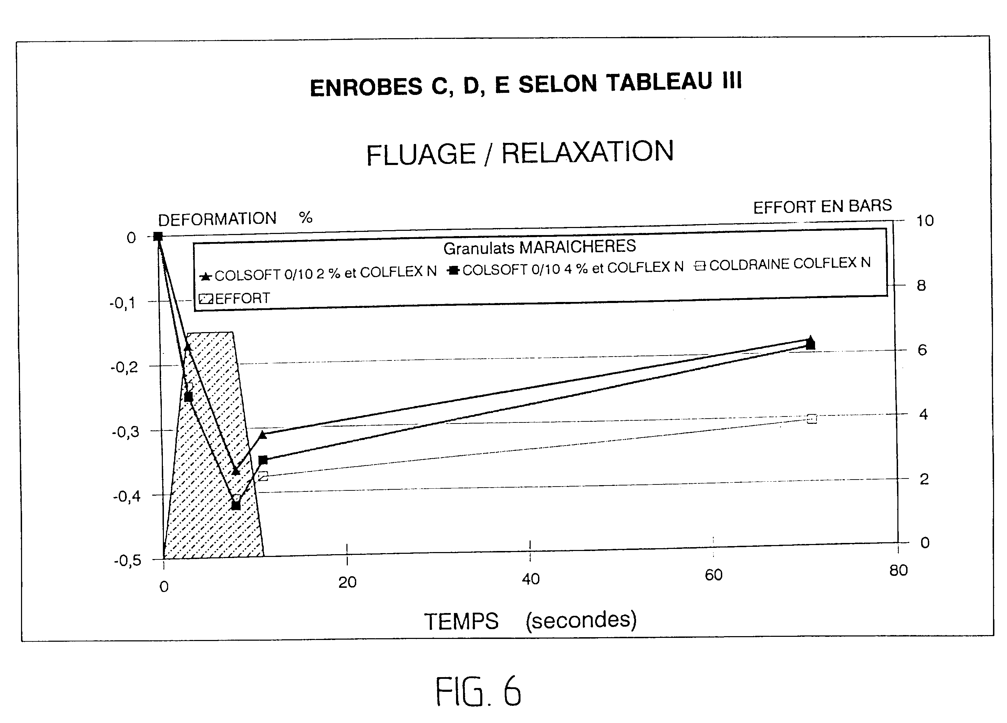

L'ensemble des résultats obtenus par des essais classiques et des essais particuliers sur des enrobés bitumineux D et E selon l'invention, ainsi que sur un enrobé C de référence sont représentés dans le tableau III et sur le graphique de la Figure 6. Ces résultats montrent que les enrobés bitumineux D et E de l'invention présentent des fluages inférieurs ou égaux au fluage de l'enrobé bitumineux C de référence. Ceci montre que leur tenue sous charge est au moins aussi bonne que celle de l'enrobé bitumineux de référence. Par ailleurs le phénomène de relaxation est sensiblement plus marqué pour les enrobés bitumineux de l'invention et d'autant plus que la teneur en caoutchouc est élevée. Ceci traduit leur aptitude à une plus grande élasticité permettant leur emploi sur des supports très déformables.

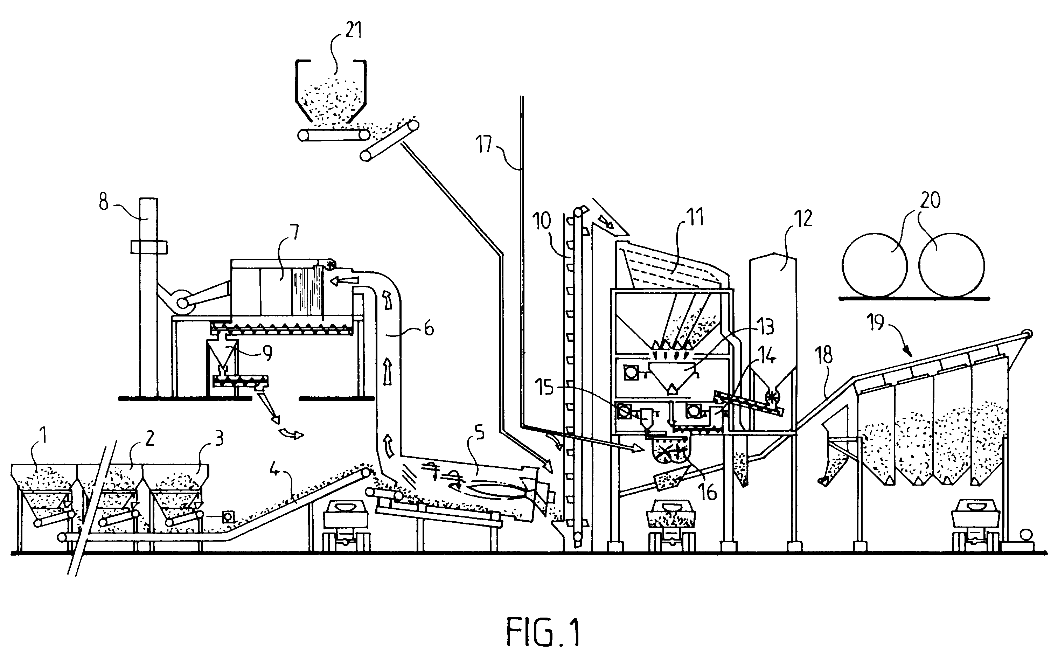

La fabrication des enrobés bitumineux conformément à l'invention peut être réalisée dans des centrales de type discontinu dont un exemple est représenté sur la Figure 1. Des granulats provenant de trémies 1, 2 et 3, appelées également prédoseurs selon leur fonction, sont transportés sur une bande de transport 4 vers un sécheur 5 et introduits dans celui-ci.

Les gaz et vapeurs de séchage sont dégagés par un conduit 6 vers un filtre dépoussiéreur 7 et extraits par une cheminée 8. Les particules poussiéreuses retenues par le filtre dépoussiéreur 7 sont collectées et récupérées dans une trémie 9.

Les granulats séchés sortant du sécheur 5 sont transportés à chaud par un transporteur 10, appelé aussi élévateur à chaud en général, dans une tour d'enrobage 11 à laquelle est associé un silo à fines d'apport.

La tour d'enrobage 11 comprend un doseur 13 pour doser les granulats, un doseur 14 pour doser les fines d'apport et un doseur 15 pour doser le liant bitumineux nécessaire à la fabrication de l'enrobé.

La tour d'enrobage 11 comprend également ce doseur 15 destiné au dosage du liant bitumineux provenant d'une cuve 20.

De plus, la tour d'enrobage comprend un malaxeur 16 dans lequel sont introduits les granulats, les fines d'apport et les additifs éventuels provenant respectivement des doseurs 13, 14 et 15.

La tour d'enrobage 11 comprend également des moyens d'apport 17, représentés par une simple flèche, destinés à introduire dans le malaxeur des sacs thermofusibles contenant de la poudre de caoutchouc.

Il s'agit en général d'une trappe s'ouvrant sur le malaxeur et destinée à recevoir toutes sortes d'additifs.

Le caoutchouc peut être également dosé à l'aide d'une trémie doseuse 21 permettant son incorporation au pied de l'élévateur à chaud 10.

Une fois le malaxage terminé, les enrobés bitumineux obtenus sont transportés par un deuxième transporteur 18 vers des trémies de stockage 19 des enrobés. Les trémies de stockage 19 sont alternativement calorifugées ou chauffées pour maintenir les enrobés bitumineux à leur température de fabrication pendant au moins une heure.

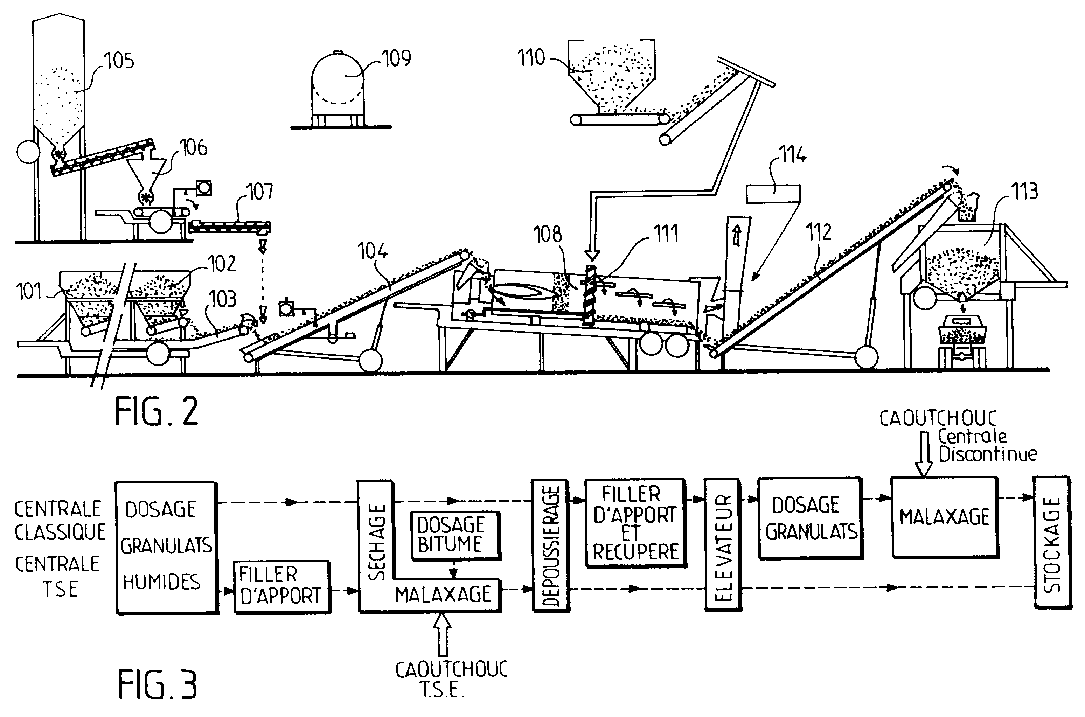

En alternative, la fabrication des enrobés selon l'invention peut être effectuée dans une centrale utilisant un tambour-sécheur-mélangeur. Une telle centrale est représentée, à titre d'exemple, sur la Figure 2.

Des granulats provenant de prédoseurs 101 et 102 sont transportés sur une bande de transport 103 vers une sauterelle peseuse 104 et déversés sur celle-ci.

En outre, des fines d'apport provenant d'un silo à fines d'apport 105 sont prédosées dans un prédoseur 106 et transportées vers la sauterelle peseuse 104 par une transporteuse à vis sans fin 107 et déversées sur la sauterelle peseuse 104.

Les granulats et les fines d'apport sont amenés par la sauterelle peseuse 104 vers, et versés dans, un tambour-sécheur-mélangeur 108.

Dans le tambour-sécheur-mélangeur 108, le mélange de granulats et de fines d'apport est séché et ensuite mélangé avec du bitume provenant d'une citerne de stockage de liant 109 et malaxé. Ensuite, du caoutchouc provenant d'une trémie 110 est ajouté au mélange au moyen d'un anneau de recyclage 111 et malaxé avec l'ensemble des composés de l'enrobé bitumineux.

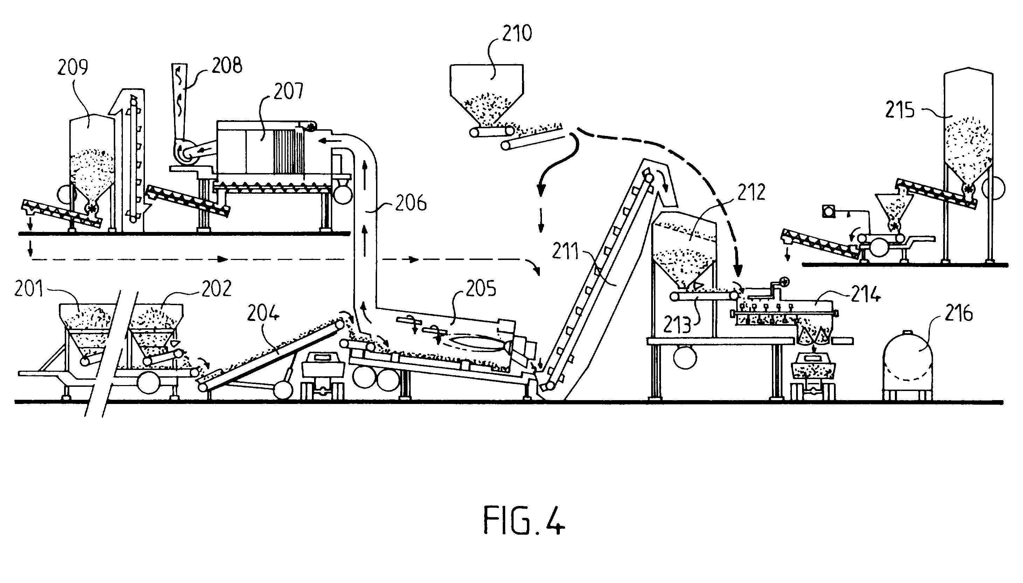

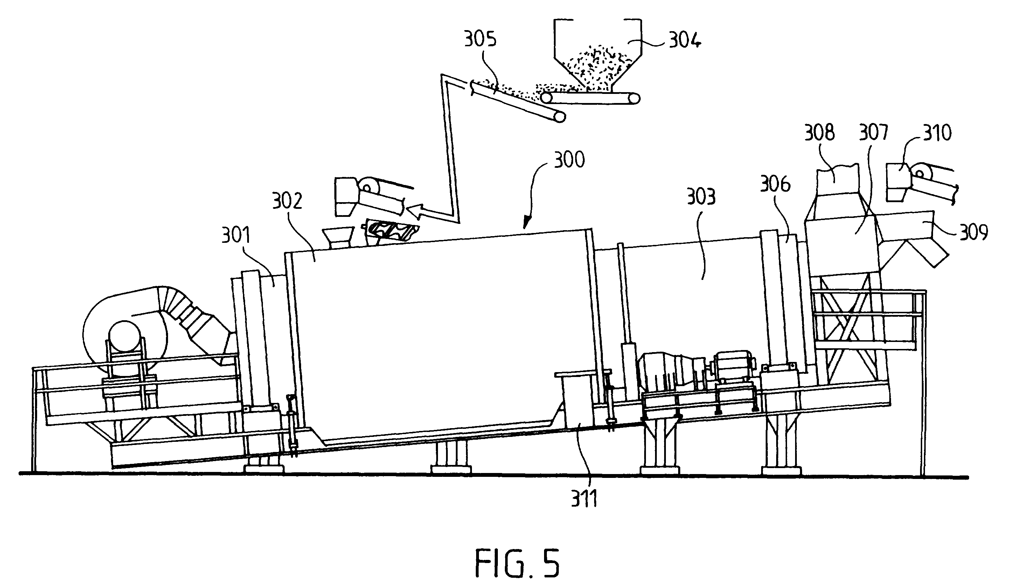

Enfin l'enrobé peut être obtenu dans des centrales d'enrobage de type continu classique ou de type continu Retroflux ou double tambour tel que représenté respectivement sur les Figures 4 et 5. Dans le cas de la centrale continue classique, le caoutchouc est introduit au pied de l'élévateur à chaud ou à l'entrée du malaxeur. Dans le cas d'une centrale Retroflux le caoutchouc est introduit par l'anneau de recyclage.

Une fois l'enrobé bitumineux obtenu, celui-ci est transporté par une bande de transport 112 vers, et déversé dans, une trémie de stockage d'enrobé 113 pour y être maintenu à sa température de fabrication pendant au moins une heure. A cette fin, la trémie de stockage 113 est calorifugée ou, en alternative, chauffée.

Pour mieux mettre en évidence la différence entre les procédés de fabrication de l'enrobé bitumineux dans une centrale classique et dans une centrale munie d'un tambour sécheur mélangeur, les étapes du procédé de fabrication sont représentées de manière synoptique sur la Figure 3.

On observe que dans une centrale classique, l'enrobé bitumineux de l'invention est fabriqué en les étapes suivantes: dosage des granulats, séchage des granulats, dépoussièrage des granulats séchés, rajout d'un filler d'apport et récupéré, transport de l'ensemble de ces matériaux par un élévateur à chaud vers une trémie de dosage, dosage des granulats, rajout de poudre de caoutchouc, malaxage de l'ensemble des matériaux, et stockage de l'enrobé obtenu.

Dans une centrale munie d'un tambour sécheur mélangeur, l'enrobé bitumineux de l'invention est obtenu au contraire en les étapes de dosage des granulats, rajout d'un filler d'apport, séchage de ces matériaux, dosage d'un bitume et rajout de ce bitume aux granulats, dosage et rajout de poudre de caoutchouc, malaxage de l'ensemble des matériaux, dépoussièrage de l'enrobé bitumineux obtenu, transport de l'enrobé bitumineux obtenu par un élévateur à chaud vers une trémie de stockage, et stockage.

La fabrication des enrobés bitumineux conformément à l'invention peut également être réalisée dans des centrales de type continu dont un exemple est représenté sur la Figure 4. Des granulats provenant de trémie 201 et 202, appelées également prédoseurs selon leur fonction, sont transportés sur une bande de transport 204, appelée aussi convoyeur à froid, vers un sécheur 205 et introduits dans celui-ci.

Les gaz et vapeurs de séchage sont dégagés par un conduit 206 vers un filtre dépoussiéreur 207 et extraits par une cheminée 208. Les particules poussiéreuses retenues par le filtre dépoussiéreur 207 sont collectées et récupérées dans une trémie 209.

Aux granulats séchés sortant du sécheur 205 sont ajoutées, d'une part, une quantité prédosée de poudre de caoutchouc provenant d'une trémie prédoseuse 210, et, d'autre part des fines d'apport et des récupérées provenant de la trémie 209. L'ensemble des agrégats et du caoutchouc est transporté à chaud par un transporteur 211, appelé aussi élévateur à chaud, vers un malaxeur 212. Le produit sortant du malaxeur 212 est transporté par un convoyeur 213 vers une trémie de dosage 214 destinée à charger le produit obtenu sur des camions.

Des fines d'apport provenant d'un silo à fines d'apport 215 et un liant bitumineux nécessaire à la fabrication de l'enrobé et provenant d'une citerne 216 sont ajoutées au produit malaxé à la sortie du convoyeur 213.

En variante de la conception de la centrale continue décrite jusqu'ici, la poudre de caoutchouc provenant de la trémie doseuse 210 peut être ajoutée aux granulats et aux autres composants de l'enrobé bitumineux que l'on souhaite obtenir, seulement à l'entrée de ces matériaux du malaxeur 214. Cette variante est représentée sur la Figure 4 par une flèche en trait interrompu.

Selon une conception encore différente, représentée sur la Figure 5, la fabrication des enrobés bitumineux conformément à l'invention peut être réalisée dans des centrales de type continu munies d'un double tambour 300.

Le double tambour 300 comprend un tambour intérieur 301 et un tambour extérieur 302 disposés coaxialement par rapport au tambour intérieur 301.

Les granulats, fines d'apport et autres matériaux additifs sont introduits dans le tambour intérieur 301, mélangés et avancés vers une zone de séchage 303. Parallèlement à cela, de la poudre de caoutchouc provenant d'une trémie doseuse 304 est transportée au moyen d'un convoyeur 305 vers le tambour extérieur 302 et introduite dans celui-ci. Au fur et à mesure que les granulats et les produits additifs avancent à l'intérieur du tambour vers la zone de séchage 303, la poudre de caoutchouc est transférée du tambour extérieur 302 vers le tambour intérieur 301 et rajoutée aux autres composants et mélangée afin d'obtenir l'enrobé bitumineux souhaité.

Les gaz et vapeurs de séchage sont dégagés par un conduit 306 vers un filtre dépoussiéreur 307 extraits par une cheminée 308. Les particules poussiéreuses retenues par le filtre dépoussiéreur 307 sont collectées et réintroduites dans le tambour extérieur 302.

Le mélange de granulats et de caoutchouc enrobé sortant du tambour double 300 en 311 est transporté à chaud vers les trémies de stockage par un transporteur 309 vers un poste de distribution (non représenté).

Les signes de référence insérés après les caractéristiques techniques mentionnées dans les revendications, ont pour seul but de faciliter la compréhension de ces dernières, et n'en limitent aucunement la portée.

**TABLEAU I**

| | Enrobé bitumineux mince (A) | Enrobé bitumineux très mince (B) |
|---|---|---|
| COMPOSITION | | |
| 6/10 Meilleraie | 63% | 86% |
| 0/2 Meilleraie | 34% | 11% |
| Filler Méac | 1% | 1% |
| Caoutchouc 0/1 Valerco | 2% | 2% |
| Bitume 60/70 | 6,2% | 4,9% |

| P.C.G. (*) | | |
|---|---|---|
| Cl | 80,8% | 66,8% |
| C25 | | 75% |
| C40 | 92,3% | |
| C200 | 97,3% | 80,3% |

| DURIEZ (**) | | |
|---|---|---|
| Rc | 5.52 MPa | 2.93 MPa |
| r/R | 0,8 | 0.77 |

| ORNIERAGE (***) | | |
|---|---|---|
| 1000 cycles | 6,6% | |
| 3000 | 9,7% | |
| 10000 | 13,3% | 6,4% |
| 30000 | | 7,0% |
| 100000 | | 7,7% |

| | | |
|---|---|---|
| (*) Essai de compactage à la presse à cisaillement giratoire selon NF P 98-252 | | |
| (**) Essai de compression simple DURIEZ-LCPC selon NF P98-251-1 | | |
| (***) Essai d'orniérage au simulateur de trafic LCPC selon NF P 98-253-1 | | |

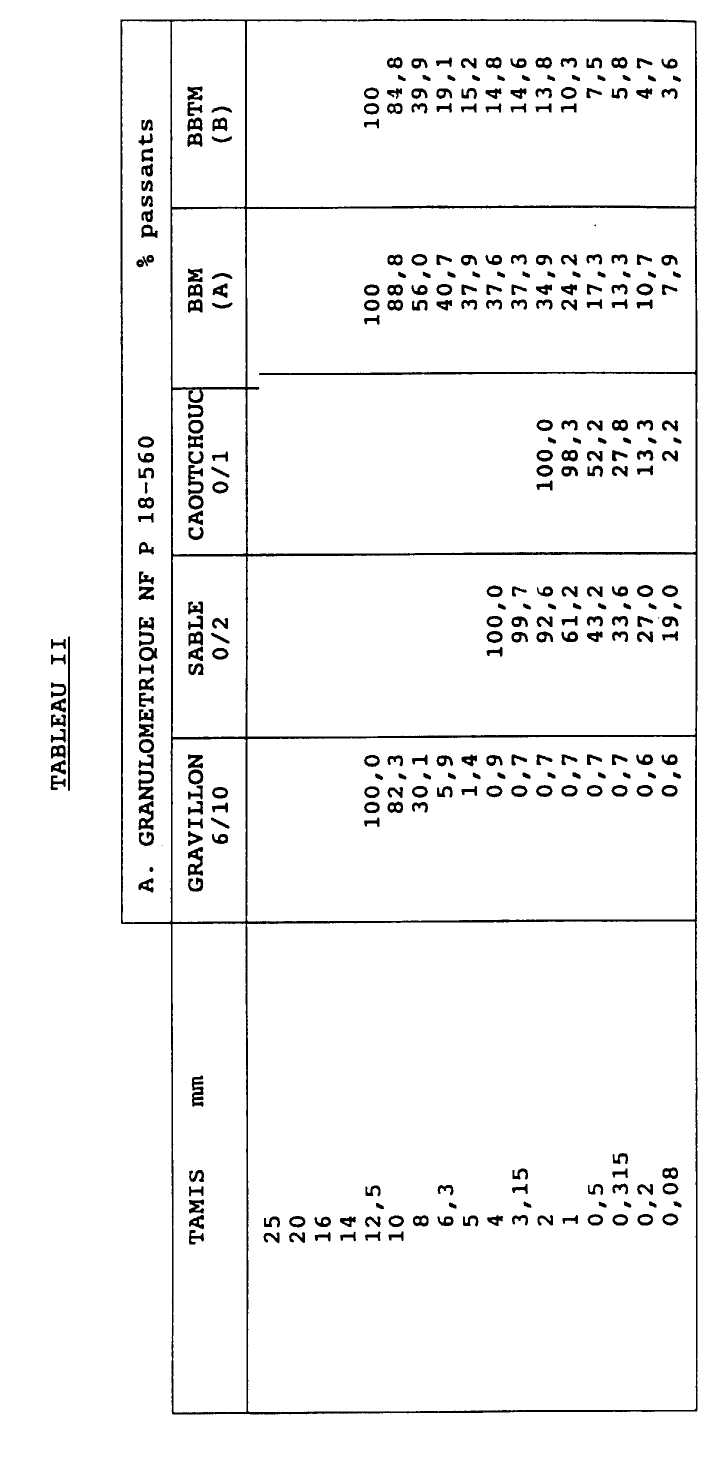

**TABLEAU III**

| | Enrobé bitumineux drainant de référence | Enrobés bitumineux de l'invention | |
|---|---|---|---|
| | (C) | (D) | (E) |
| 6/10 Maraîchères | 86% | 84% | 82% |
| 0/2 Nouel | 11% | 11% | 11% |
| Filler calcaire | 3% | 3% | 3% |
| % Caoutchouc | 0 | 2% | 4% |
| Liant | COLFLEX N 5,3% | COLFLEX N 6% | COLFLEX N 6,8% |

| COMPACTAGE PCG NF P 98-252 | | | |
|---|---|---|---|
| PCG C25 | 72,1% | 77,0% | 82,4% |
| PCG C200 | 78,6% | 83,3% | 89,0% |

| DURIEZ LCPC NF P 98-251-1 | | | |
|---|---|---|---|
| DURIEZ 18°C R(MPa) | 6,0 | 5,9 | 5,7 |
| DURIEZ r/R | 0,79 | 0,82 | 0,79 |

| ORNIERAGE NF P 98-253-1 | | | |
|---|---|---|---|
| à 100.000 cycles 60°C | > 5% | 7,7% | 4,9% |
| CANTABRO NL T 352/86 | | | |
| Perte Cantabro 18°C* | 19% | 13% | 11% |

| | Enrobé bitumineux de référence | Enrobés bitumineux de l'invention | |
|---|---|---|---|
| | (C) | (D) | (E) |
| FLUAGE RELAXATION* | | | |
| 0,05 - 7 bars 3 secondes | - 0,23% | - 0,17% | - 0,25% |
| 7 bars 5 secondes | - 0,17% | - 0,19% | - 0,17% |
| 7 - 0,05 bars 3 secondes | + 0,03% | + 0,05% | + 0,07% |
| 0,05 bars 60 secondes | + 0,07% | + 0,13% | + 0,16% |

| | | | |
|---|---|---|---|
| * Déformation relative en % d'une éprouvette PCG moulée à C200 sous la pression indiquée | | | |

## Revendications

1. Enrobé bitumineux à chaud destiné à constituer une couche de roulement d'une route, comprenant comme liant un bitume classique ou un bitume modifié et des granulats comprenant des gravillons et une fraction sableuse propres à constituer un mélange granulaire de granulométrie discontinue et la fraction sableuse ayant un volume inférieur au volume interstitiel des graviers,
caractérisé en ce qu'une partie de la fraction sableuse est remplacée par de la poudre de caoutchouc, les particules de la poudre ayant un diamètre moyen compris entre 0 et 1,5 mm.

2. Enrobé selon la revendication 1, caractérisé en ce que le pourcentage de caoutchouc dans le mélange granulats-caoutchouc est compris entre 1,5 et 10%.

3. Enrobé selon la revendication 1 ou 2, caractérisé en ce qu'il comporte du caoutchouc d'origine naturel et en ce que le pourcentage de caoutchouc naturel dans le mélange granulats-caoutchouc est de l'ordre de 4%.

4. Enrobé selon la revendication 1 ou 2, caractérisé en ce qu'il comporte du caoutchouc synthétique et en ce que le pourcentage de caoutchouc synthétique dans le mélange granulats-caoutchouc est de l'ordre de 2%.

5. Enrobé selon l'une quelconque des revendications 1 à 4, caractérisé en ce que le pourcentage de bitume est compris entre 4 et 14%.

6. Enrobé selon l'une quelconque des revendications 1 à 5, caractérisé en ce qu'il est répandu en une couche de roulement mince d'une route, l'épaisseur de la couche étant comprise entre 1,5 et 4 cm.

7. Procédé de fabrication d'un enrobé bitumineux à chaud destiné à constituer une couche de roulement d'une route et comprenant comme liant un bitume classique ou un bitume modifié, l'enrobé bitumineux ayant une granulométrie discontinue et comportant une fraction sableuse,
le procédé comprenant l'étape de porter les granulats à la température d'enrobage, de porter le liant à la température d'enrobage et de malaxer les granulats et le liant en vue de produire l'enrobé bitumineux,
caractérisé en ce qu'une poudre de caoutchouc dont les particules ont un diamètre moyen compris entre 0 et 1,5 mm et qui est à température ambiante, est ajouté, pendant le malaxage, au mélange granulats-bitume déjà porté à la température d'enrobage.

8. Procédé de fabrication d'un enrobé bitumineux à chaud destiné à constituer une couche de roulement d'une route et comprenant comme liant un bitume classique ou un bitume modifié, l'enrobé bitumineux ayant une granulométrie discontinue et comportant une fraction sableuse,
le procédé comprenant l'étape de porter les granulats à la température d'enrobage, de porter le liant à la température d'enrobage et de malaxer les granulats et le liant en vue de produit l'enrobé bitumineux,
caractérisé en ce qu'une poudre de caoutchouc dont les particules ont un diamètre moyens compris entre 0 et 1,5 mm et qui est à la température ambiante, est ajouté, entre la fin du séchage des agrégats minéraux et le début du malaxage.

9. Procédé selon l'une des revendications 7 et 8, mis en oeuvre dans une centrale de fabrication discontinue, caractérisé en ce que le caoutchouc est introduit au malaxeur en sacs thermofusibles ou de façon continue au pied d'un l'élévateur à chaud.

10. Procédé selon l'une des revendications 7 et 8, mis en oeuvre dans une centrale de fabrication continue, caractérisé en ce que le caoutchouc est introduit au malaxeur ou au pied d'un élévateur à chaud en fin de séchage.

11. Procédé selon l'une quelconque des revendications 7 à 10, caractérisé en ce que l'enrobé bitumineux obtenu est maintenu à sa température de fabrication pendant au moins une heure.

12. Procédé de réalisation d'une couche de roulement d'une route avec un enrobé bitumineux selon l'une quelconque des revendications 1 à 6 ou obtenu par la mise en oeuvre d'un procédé de fabrication selon l'une quelconque des revendications 7 à 11, comprenant les étapes de répandage d'une couche d'accrochage sur la route destiné à recevoir la couche de roulement, répandage d'une couche dudit enrobé bitumineux et compactage de cette couche d'enrobé bitumineux.

13. Procédé de réalisation d'une couche de roulement d'une route selon la revendication 12, caractérisé en ce que le compactage est effectué avec un compacteur autre qu'un compacteur à pneumatiques.

## Patentansprüche

1. Bituminöses Heißmischgut, dazu bestimmt, die Deckschicht einer Straße zu bilden, das als Bindemittel ein herkömmliches Bitumen oder ein modifiziertes Bitumen enthält und Granulate, die Split und eine Sandfraktion umfassen, die geeignet sind, eine Granulatmischung diskontinuierlicher Kornabstufung zu bilden und wobei die Sandfraktion ein geringeres Volumen hat, als das Zwischenraumvolumen des Splits,
dadurch gekennzeichnet, daß ein Teil der Sandfraktion durch Kautschukpulver ersetzt wird, wobei die Pulverteilchen einen mittleren Durchmesser zwischen 0 und 1,5 mm haben.

2. Mischgut nach Patentanspruch 1, dadurch gekennzeichnet, daß der Anteil an Kautschuk im Granulat-Kautschuk-Gemisch zwischen 1,5 und 10% liegt.

3. Mischgut nach Patentanspruch 1 oder 2, dadurch gekennzeichnet, daß es Kautschuk natürlichen Ursprungs enthält und dadurch, daß der Anteil an natürlichem Kautschuk im Granulat-Kautschuk-Gemisch in der Größenordnung von 4% liegt.

4. Mischgut nach Patentanspruch 1 oder 2, dadurch gekennzeichnet, daß es synthetischen Kautschuk enthält und dadurch, daß der Anteil an synthetischem Kautschuk im Granulat-Kautschuk-Gemisch in der Größenordnung von 2% liegt.

5. Mischgut nach irgendeinem der Patentansprüche 1 bis 4, dadurch gekennzeichnet, daß der Bitumenanteil zwischen 4 und 14% liegt.

6. Mischgut nach irgendeinem der Patentansprüche 1 bis 5, dadurch gekennzeichnet, daß es als dünne Deckschicht einer Straße aufgebracht wird, wobei die Dicke der Schicht zwischen 1,5 und 4 cm liegt.

7. Verfahren zur Herstellung eines bituminösen Heißmischgutes, dazu bestimmt, die Deckschicht einer Straße zu bilden, das als Bindemittel ein herkömmliches Bitumen oder ein modifiziertes Bitumen enthält, wobei das bituminöse Mischgut eine diskontinuierliche Kornabstufung aufweist und eine Sandfraktion umfaßt,
wobei das Verfahren einen Schritt umfaßt, in dem die Granulate auf die Mischtemperatur gebracht werden, das Bindemittel auf die Mischtemperatur gebracht wird und die Granulate und das Bindemittel zwangsgemischt werden, um das bituminöse Mischgut herzustellen,
dadurch gekennzeichnet, daß ein Kautschukpulver, dessen Teilchen einen mittleren Durchmesser zwischen 0 und 1,5 mm haben und das auf Raumtemperatur ist, während des Zwangsmischens dem Granulat-Bitumen-Gemisch zugesetzt wird, das bereits auf die Mischtemperatur gebracht wurde.

8. Verfahren zur Herstellung eines bituminösen Heißmischgutes, dazu bestimmt, die Deckschicht einer Straße zu bilden, das als Bindemittel ein herkömmliches Bitumen oder ein modifiziertes Bitumen enthält, wobei das bituminöse Mischgut eine diskontinuierliche Kornabstufung aufweist und eine Sandfraktion umfaßt,
wobei das Verfahren einen Schritt umfaßt, in dem die Granulate auf die Mischtemperatur gebracht werden, das Bindemittel auf die Mischtemperatur gebracht wird und die Granulate und das Bindemittel zwangsgemischt werden, um das bituminöse Mischgut herzustellen,
dadurch gekennzeichnet, daß ein Kautschukpulver, dessen Teilchen einen mittleren Durchmesser zwischen 0 und 1,5 mm haben und das auf Raumtemperatur ist, nach dem Ende des Trocknens der mineralischen Zuschlagstoffe und vor dem Beginn des Zwangsmischens zugesetzt wird.

9. Verfahren nach einem der Patentansprüche 7 und 8, angewandt in einer Chargenproduktionsanlage, dadurch gekennzeichnet, daß der Kautschuk in warmschmelzbaren Säcken in den Zwangsmischer eingebracht wird oder kontinuierlich an den Fuß eines Heißbecherwerkes.

10. Verfahren nach einem der Patentansprüche 7 und 8, angewandt in einer Durchlaufproduktionsanlage, dadurch gekennzeichnet, daß der Kautschuk am Ende des Trocknens in den Zwangsmischer oder an den Fuß eines Heißbecherwerkes gebracht wird.

11. Verfahren nach irgendeinem der Patentansprüche 7 bis 10, dadurch gekennzeichnet, daß das erhaltene bituminöse Mischgut während mindestens einer Stunde auf seiner Herstellungstemperatur gehalten wird.

12. Verfahren zur Herstellung der Deckschicht einer Straße mit einem bituminösen Mischgut nach irgendeinem der Patentansprüche 1 bis 6 oder erhalten durch Anwendung eines Herstellungsverfahrens nach irgendeinem der Patentansprüche 7 bis 11, umfassend die Schritte Aufbringen einer Haftschicht auf die Straße, die die Deckschicht erhalten soll, Aufbringen einer Schicht des genannten bituminösen Mischgutes und Verdichten dieser Schicht bituminösen Mischgutes.

13. Verfahren zur Herstellung der Deckschicht einer Straße nach Patentanspruch 12, dadurch gekennzeichnet, daß das Verdichten mit einer anderen Walze, als einer Luftreifenwalze erfolgt.

## Claims

1. A hot bituminous road covering designed to constitute a road upper layer, comprising as a binder a conventional bitumen or a modified bitumen and granulates containing gravel and a sand fraction liable to constitute a granular mixture with discontinuous granulometry and whereas the sand fraction exhibits a smaller volume than the interstitial volume of the gravel, characterised in that a portion of the sand fraction is rcplaced with rubber powder, whereby the powder particles have an average diameter ranging from 0 to 1.5 mm.

2. A road covering according to claim 1, characterised in that the rubber percentage in the granulate/rubber mixture ranges from 1.5 to 10%.

3. A road covering according to claim 1 or 2, characterised in that it contains rubber of natural origin and that the percentage of natural rubber in the granulate/rubber mixture is in the order of 4%.

4. A road covering according to claim 1 or 2, characterised in that it contains synthetic rubber and that the percentage of synthetic rubber in the granulate/rubber mixture is in the order of 2%.

5. A road covering according to any of the claims I to 4, characterised in that the bitumen percentage ranges from 4 to 14%.

6. A road covering according to any of thc claims 1 to 5, characterised in that it is spread as a thin road upper layer, whereas the thickness of the layer ranges from 1.5 to 4 cm.

7. A manufacturing process for a hot bituminous road covering, designed to constitute a road upper layer and comprising as a binder a conventional bitumen or a modified bitumen, whereby the bituminous road covering shows discontinuous granulometry and contains a sand fraction, whereas the process consists in bringing the granulates to the covering temperature, in bringing the binder to the covering temperature and in mixing the granulates and the binder in order to produce the bituminous road covering, characterised in that a rubber powder whose particles have an averagc diameter ranging from 0 to 1.5 mm and which is at room temperature, is added, during the mixing phase, to the granulate/bitumen mixture already brought to the covering temperature.

8. A manufacturing process for a hot bituminous road covering dcsigned to constitute a road covering layer and comprising a as a bindcr a conventional bitumen or a modified bitumen, whereby the bituminous road covering shows discontinuous granulometry and contains a sand fraction, whereas thc process consists in bringing the granulates to the covering temperature, in bringing the binder to the covering temperature and in mixing the granulates and the binder in order to produce the bituminous road covering, characterised in that a rubber powder whose particles have an average diameter ranging from 0 to 1.5 mm and which is at room temperature, is added, between the end of the drying phase of the mineral aggregates and the beginning of the mixing phase.

9. A process according to one of the claims 7 and 8, implemented in a discontinuous manufacturing unit, characterised in that the rubber is injected into the mixer in the form of heat-melting bags or continuously at the base of a hot elevator.

10. A process according to one of the claims 7 and 8, implemented in a continuous manufacturing unit, characterised in that the rubber is injected into the mixer or at the base of a hot elevator.

11. A process according to any of the claims 7 to 10, characterised in that the bituminous road covering obtained is maintained at its manufacture temperature for at least one hour.

12. A process for constructing a road upper layer with a bituminous covering according to any of the claims 1 to 6 or obtained by implementing a manufacturing process according to any of the claims 7 to 11, consisting in spreading a bottom layer on the road, designed for receiving the upper layer, spreading a layer of the said bituminous and compacting the said bituminous covering layer.

13. A process for constructing a road upper layer according to claim 12, characterised in that the compacting phase is performed by a roller other than a multi-rubber-tire roller.
